# EUROPÄISCHE PATENTSCHRIFT

(11) **EP 2 276 165 B1**
(45) Veröffentlichungstag und Bekanntmachung des Hinweises auf die Patenterteilung: **19.09.2012**
(21) Anmeldenummer: 10006963.2
(22) Anmeldetag: 06.07.2010
(51) Int. Cl.: H02P 3/14, H02P 5/46, B29C 45/50, B29C 45/76, H02M 7/797

(54) **Kunststoffverarbeitungsmaschine und Verfahren zum Betreiben einer solchen**
Plastic processing machine and method for operating the same
Machine de traitement de matière synthétique et son procédé de fonctionnement

(30) Priorität: 14.07.2009 DE 102009033228
(43) Veröffentlichungstag der Anmeldung: 19.01.2011
(73) Patentinhaber: Wittmann Battenfeld GmbH, 2542 Kottingbrunn (AT)
(72) Erfinder: Brunbauer, Klaus, 2540 Bad Voeslau (AT)
(74) Vertreter: Gosdin, Michael

(56) Entgegenhaltungen:
- EP-A2- 0 603 907
- DE-A1- 10 152 198
- DE-A1- 10 152 487
- JP-A- 5 193 871
- US-A1- 2004 149 160

## Beschreibung

Die Erfindung betrifft eine Kunststoffverarbeitungsmaschine, insbesondere eine Spritzgießmaschine, die mindestens zwei elektrische Verbraucher aufweist, wobei mindestens einer der elektrischen Verbraucher auch für einen Generatorbetrieb zur Umwandlung kinetischer Energie in elektrische Energie ausgebildet ist, wobei die Maschine zur Versorgung mit elektrischer Energie mit einem elektrischen Wechselstromnetz in Verbindung steht, wobei das elektrische Netz über einen Gleichrichter mit einem Gleichstromzwischenkreis verbunden ist, wobei zumindest ein Teil der elektrischen Verbraucher mit dem Gleichstromzwischenkreis elektrisch verbunden ist und aus diesem mit elektrischer Energie versorgbar ist und wobei zumindest ein Teil der für einen Generatorbetrieb ausgebildeten elektrischen Verbraucher zur Einspeisung generatorisch erzeugter elektrischer Energie mit dem Gleichstromzwischenkreis in elektrischer Verbindung stehen. Des weiteren betrifft die Erfindung ein Verfahren zum Betreiben einer solchen Kunststoffverarbeitungsmaschine.

Eine Spritzgießmaschine und ein Verfahren dieser Art sind aus der AT 401 116 B bekannt. Eine ähnliche Lösung offenbart die DE 10 2006 036 267 A1**.**

Die JP 5193871 offenbart ein Aufzugssystem, bei dem mechanische Energie rückgewonnen und in Wärmeenergie umgewandelt wird. Die DE 101 52 198 A1 beschreibt eine elektrische Kunststoffspritzgießmaschine, bei der die elektrischen Antriebselemente aus einem Gleichspannung-Zwischenkreis gespeist werden.

Die Energieeffizienz von Kunststoffverarbeitungsmaschinen und insbesondere von Spritzgießmaschinen gewinnt immer mehr an Bedeutung. Bekannt sind Spritzgießmaschinen der eingangs genannten Art, bei denen die diversen Stell- bzw. Verfahrbewegungen mittels elektrischer Motoren, insbesondere Servomotoren, ausgeführt werden. Diese Lösung stellt bereits im Vergleich mit hydraulisch betriebenen Spritzgießmaschinen zumeist eine Verbesserung der Energieeffizienz dar. Selbst bei sehr verbrauchsarmen elektrisch angetriebenen Spritzgießmaschinen wird jedoch nach weiteren Möglichkeiten gesucht, um die Energieeffizienz zu erhöhen.

Ein Ansatz hierzu könnte es sein, die bei Verzögerungs- bzw. Bremsvorgängen anfallende kinetische Energie rückzugewinnen bzw. zu nutzen, die bei elektrisch angetriebenen Spritzgießmaschinen üblicherweise zwar in elektrische Energie umgewandelt wird, dann aber in Brems bzw. Ballastwiderständen in Wärme umgewandelt wird.

Eine konkrete Möglichkeit, dieses Konzept zu nutzen, wäre, netzrückspeisefähige Servoumrichter einzusetzen. Dies hat jedoch folgende Nachteile: Zum einen fallen erheblich höhere Kosten für die benötigten Komponenten an, die teils sehr aufwändig sind. Zum anderen kommt es zu höheren Verlusten durch Rückspeisedrosseln und auch durch Netzfilter, was in beiden Energierichtungen - also auch bei der Energieentnahme aus dem Netz - zum Tragen kommt. Weiterhin sind bei Netzausfall Einschränkungen bei Verzögerungen zu befürchten (im Extremfall kann nicht mehr gebremst werden), weil Spannungen im elektrischen Bereich der Spritzgießmaschine unzulässig hoch ansteigen würden.

Der Erfindung liegt daher die Aufgabe zugrunde, eine Kunststoffverarbeitungsmaschine, insbesondere eine Spritzgießmaschine, so fortzubilden und ein Verfahren für deren Betrieb vorzuschlagen, so dass es möglich wird, die Energieeffizienz der Maschine weiter zu erhöhen.

Die Lösung dieser Aufgabe durch die Erfindung ist dadurch gekennzeichnet, dass nach Anspruch 1 mindestens ein elektrischer Verbraucher in Form eines Heizelements an den Gleichstromzwischenkreis elektrisch gekoppelt ist, wobei die Energieentnahme des elektrischen Verbrauchers aus dem Gleichstromzwischenkreis mittels eines Halbleiterschaltelements gesteuert ist, wobei das Halbleiterschaltelement mit mindestens einem Temperatursensor zur Erfassung eines Betriebsparameters des elektrischen Verbrauchers in Verbindung steht, wobei das Halbleiterschaltelement mit mindestens einem Spannungsmesser zur Erfassung der Gleichstromzwischenkreisspannung in Verbindung steht, wobei das Halbleiterschaltelement zur Steuerung des Verbrauchers in der Weise ausgebildet ist, dass einerseits dem Verbraucher aus dem Gleichstromzwischenkreis die für seine Aufgabe nötige Energie zugeführt wird und andererseits die Zwischenkreisspannung im Gleichstromzwischenkreis unterhalb eines maximal zulässigen Wertes gehalten wird, indem das Halbleiterschaltelement einen ersten Vergleicher zum Vergleichen des vom Temperatursensor gemessenen Werts des Betriebsparameters mit einem vorgegebenen Wert für den Betriebsparameter umfasst, wobei das Halbleiterschaltelement eine erste Recheneinheit zur Ermittlung einer benötigten Einschaltdauer für den elektrischen Verbraucher zum Einhalten des vorgegebenen Werts für den Betriebsparameter umfasst, wobei das Halbleiterschaltelement einen zweiten Vergleicher zum Vergleichen des vom Spannungsmesser gemessenen Werts der Zwischenkreisspannung mit einem vorgegebenen maximalen Wert für die Zwischenkreisspannung umfasst, wobei das Halbleiterschaltelement eine zweite Recheneinheit zur Ermittlung einer benötigten Einschaltdauer für den elektrischen Verbraucher zum Einhalten des maximalen Werts für die Zwischenkreisspannung umfasst.

Vorzugsweise ist mindestens ein Speicherelement für elektrische Energie mit dem Gleichstromzwischenkreis elektrisch verbunden. Bei diesem handelt es sich zumeist um einen Kondensator mit großer Kapazität.

Ein Steuerstromkreis kann elektrisch über ein Schaltnetzteil mit dem Gleichstromzwischenkreis in Verbindung stehen. Mindestens ein elektrischer Verbraucher kann mit dem Steuerstromkreis elektrisch in Verbindung stehen. Der elektrische Verbraucher ist beispielsweise eine Maschinensteuerung (CPU), eine Bedieneinheit (MMI), ein Steuerteil eines Servoumrichters, ein Sensor, eine Meldelampe, ein Schütz, ein Schalter, ein Ventil, ein Magnet oder ein Lüfter.

Das Halbleiterschaltelement ist vorzugsweise ein Bipolartransistor mit isolierter Gate-Elektrode (Insulated Gate Bipolar Transistor, IGBT).

Die erste und die zweite Recheneinheit können mit einem Maximalwertbildner verbunden sein, der den größeren der beiden genannten Werte für die Einschaltdauer ermittelt. Der Maximalwertbildner kann in diesem Falle dann mit dem Halbleiterschaltelement in Verbindung stehen, um eine vorgegebene Einschaltdauer für den elektrischen Verbraucher vorzugeben. Zwischen dem Maximalwertbildner und dem Halbleiterschaltelement kann ein Funktionsblock zur Definition von Einschaltimpulsen angeordnet sein.

Das Verfahren zum Betreiben einer Kunststoffverarbeitungsmaschine, insbesondere einer Spritzgießmaschine, die mindestens zwei elektrische Verbraucher aufweist, wobei mindestens einer der elektrischen Verbraucher auch für einen Generatorbetrieb zur Umwandlung kinetischer Energie in elektrische Energie ausgebildet ist, wobei die Maschine zur Versorgung mit elektrischer Energie mit einem elektrischen Wechselstromnetz in Verbindung steht, wobei elektrische Energie aus einem elektrischen Netz über einen Gleichrichter in einen Gleichstromzwischenkreis eingespeist wird, wobei zumindest ein Teil der elektrischen Verbraucher mit dem Gleichstromzwischenkreis elektrisch verbunden ist und aus diesem mit elektrischer Energie versorgt werden und wobei zumindest ein Teil der für einen Generatorbetrieb ausgebildeten elektrischen Verbraucher aus kinetischer Energie generatorisch gewonnene elektrische Energie in den Gleichstromzwischenkreis einspeisen, zeichnet sich dadurch aus, dass mindestens einer der elektrischen Verbraucher in Form eines Heizelements mittels eines Halbleiterschaltelements so gesteuert wird, dass einerseits dem Verbraucher aus dem Gleichstromzwischenkreis die für seine Aufgabe nötige Energie zugeführt wird und andererseits die Zwischenkreisspannung im Gleichstromzwischenkreis unterhalb eines maximal zulässigen Wertes gehalten wird, wobei dem Halbleiterschaltelement ein von einem Sensor erfasster Betriebsparameter des elektrischen Verbrauchers zugeleitet wird.

Beim Betrieb der Maschine wird dabei bevorzugt elektrische Energie in einem Speicherelement für elektrische Energie, insbesondere in einem Kondensator, zwischengespeichert, der mit dem Gleichstromzwischenkreis elektrisch verbunden ist.

Eine bevorzugte Ausgestaltung des Verfahrens sieht dabei vor, dass aus dem elektrischen Netz solange keine Energie entnommen wird, wie die elektrische Spannung in dem Gleichstromzwischenkreis über einem vorgegebenen Wert liegt. Bei dem vorgegebenen Wert handelt es sich insbesondere um die elektrische Spannung im Gleichrichter.

Eine weitere vorteilhafte Ausgestaltung des Verfahrens sieht vor, dass zum generatorischen Betrieb geeignete elektrische Verbraucher in Form von Servomotoren verwendet werden, wobei diese einen Servoumrichter mit einem Bremstransistor, insbesondere in Form eines Halbleiterbauelements oder eines Bipolartransistors mit isolierter Gate-Elektrode (Insulated Gate Bipolar Transistor, IGBT), aufweisen, wobei der Bremstransistor zur Ansteuerung eines weiteren elektrischen Verbrauchers verwendet wird

Das vorgeschlagene System der Rückgewinnung kinetischer Energie insbesondere bei elektrischen Spritzgießmaschinen stellt ein aus mehreren Einzelmaßnahmen zusammengesetztes Konzept dar, um die kinetische Energie, die bei Verzögerungs- bzw. Bremsvorgängen elektrisch angetriebener Achsen anfällt, rückzugewinnen bzw. sinnvoll zu nutzen. Ferner werden in vorteilhafter Weise die oben genannten Nachteile netzrückspeisefähiger Systeme ausgeschlossen. Ferner können sogar zusätzlich Kosten reduziert werden.

Mit der vorgeschlagenen Ausgestaltung wird es weiterhin möglich, dass die elektrische Anschlussleistung der Spritzgießmaschine reduziert werden kann. Hierdurch können Kosten reduziert werden, die für den elektrischen Netzanschluss, für den Hauptschalter, für Kabelquerschnitte etc. ansonsten nötig sind.

Der Erfindungsvorschlag erbringt weiterhin Vorteile bei Netzausfall. Die im vorgeschlagenen Konzept enthaltene Versorgung des Schaltnetzteiles für den Steuerstromkreis aus dem Gleichstromzwischenkreis ermöglicht es, alle Achsen der Spritzgießmaschine kontrolliert bei Netzausfall zum Stillstand zu bringen, da der Steuerstromkreis für Antriebe, für die Maschinensteuerung und für die gesamte Elektrik der Maschine bis zum Stillstand aufrecht erhalten werden kann. Ein Maschinenschaden durch Netzausfall (insbesondere eine Kollision mit mechanischen Endlagen beim Austrudeln) kann somit verhindert werden.

In der Zeichnung ist ein Ausführungsbeispiel der Erfindung dargestellt. Es zeigen:
Fig. 1 schematisch das elektrische Schaltbild einer Spritzgießmaschine und
Fig. 2 ein elektronisches Halbleiterschaltelement im Detail.

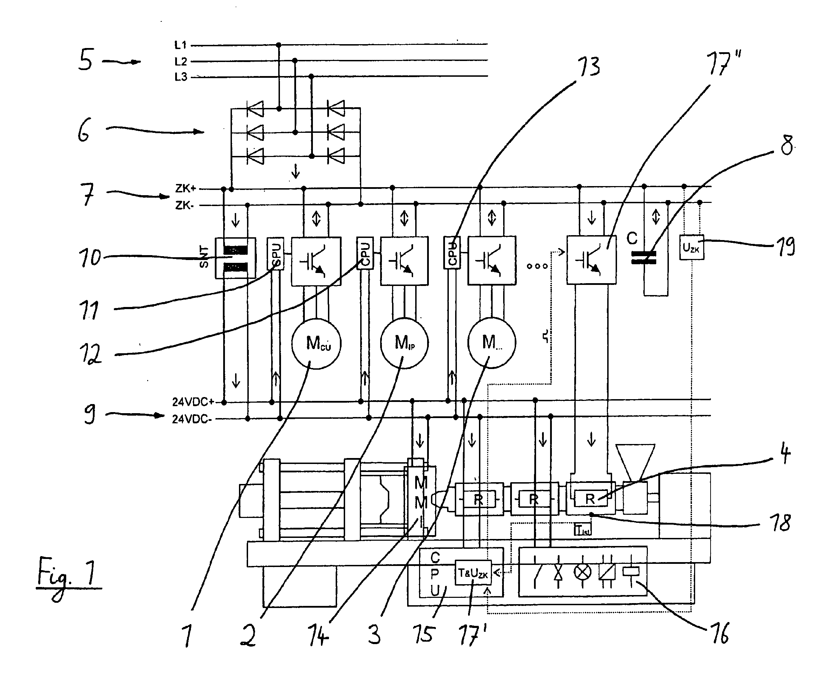

In Fig. 1 ist ein elektrisches Schaltbild skizziert, das zu einer Spritzgießmaschine gehört, die als sog. elektrische Spritzgießmaschine ausgebildet ist. Demgemäß sind alle Antriebe der Maschine elektrisch ausgebildet, vorzugsweise mit Servomotoren. Die Spritzgießmaschine hat mehrere elektrische Verbraucher 1, 2, 3, 4. Bei den Verbrauchern 1, 2 und 3 handelt es sich um Servomotoren zum Antrieb von Betätigungselementen. Der Motor 1 dient zum Antrieb der Schließeinheit der Spritzgießmaschine. Der Motor 2 dient zum Antrieb der Spritzeinheit. Der Motor 3 dient vorliegend zum Antrieb einer weiteren Achse, die z. B. diejenige eines Auswerfers sein kann. Die Motoren 1, 2, 3 sind auch geeignet, um generatorisch betrieben zu werden, d. h. aus kinetischer Energie elektrische Energie zu gewinnen.

Bei dem Verbraucher 4 handelt es sich um ein Heizelement, das beispielsweise zur Erwärmung von Kunststoffmaterial im Bereich des Plastifizierzylinders benötigt wird. Der Verbraucher 4 ist für hohe Spannungen geeignet, insbesondere für Spannungen von größer oder gleich 900 VDC. Ferner ist der Verbraucher 4 geeignet zur Aufnahme von hohen, jedoch nur kurzzeitig wirksamen Leistungsspitzen, insbesondere von mindestens 30 kW über einen Zeitraum von mindestens 250 ms.

Die Spritzgießmaschine wird aus einem Wechselstromnetz 5 mit Energie versorgt, das - wie angedeutet - dreiphasig ist. Die drei Phasen Wechselstrom werden über einen Gleichrichter 6 in Gleichstrom umgewandelt und an einen Gleichstromzwischenkreis 7 geleitet. Die elektrischen Verbraucher 1, 2, 3, 4 sind alle elektrisch mit dem Gleichstromzwischenkreis 7 verbunden.

Der Gleichrichter 6 speist also aus dem Wechselstromnetz 5 den gemeinsamen Gleichstromzwischenkreis 7, aus dem alle Antriebe bzw. sonstigen Verbraucher versorgt werden. Über diesen Gleichstromzwischenkreisverbund kann bereits ein Energieaustausch stattfinden, wenn z. B. ein Antrieb verzögert (gebremst) wird, hierdurch generatorisch arbeitet und Energie in den Gleichstromzwischenkreis 7 einspeist, die von einem anderen Verbraucher entnommen werden kann, z. B. zum Beschleunigen einer anderen Achse der Maschine mittels eines anderen Verbrauchers.

Der Gleichstromzwischenkreis 7 ist mit einem elektrischen Speicherelement 8 (Energiespeicher) in Form eines Kondensators hoher Kapazität elektrisch verbunden. Bei Bremsvorgängen wird der Kondensator 8 geladen, wodurch die Zwischenkreisspannung U_{ZK} ansteigt. Solange die Spannung des Kondensators 8 über dem Wert des Gleichrichters (d. h. über der Gleichrichterspannung) liegt, wird keine Energie aus dem Wechselstromnetz 5 entnommen, sondern das gesamte System wird elektrisch aus dem Kondensator versorgt.

Ein für den Betrieb der Spritzgießmaschine erforderlicher Steuerstromkreis 9 wird über ein Schaltnetzteil 10 zur Erzeugung einer Steuerspannung (z. B. 24 VDC) aus dem Gleichstromzwischenkreis 7 mit elektrischer Energie versorgt, und zwar ausschließlich vom Gleichstromzwischenkreis. Hierdurch wird dem Gleichstromzwischenkreis 7 permanent Energie entnommen, also auch in Phasen, in denen ausschließlich Bremsvorgänge von Antrieben stattfinden. Der Steuerstromkreis 9 versorgt eine Vielzahl von elektrischen Verbrauchern, wie z. B. Maschinensteuerungen 11, 12, 13 (CPU; Steuerung bzw. Recheneinheit), eine Bedieneinheit 14 (MMI; Bildschirm, Eingabeeinheit), ein Steuerteil eines Servoumrichters 15 (CPU), Sensoren, Meldelampen, Schütze, Schalter, Ventile, Magnete etc., die mit der Bezugsziffer 16 angedeutet sind. Diese elektrischen Verbraucher 11, 12, 13, 14, 15, 16 stellen einen nicht unerheblichen Anteil am Gesamtenergieverbrauch dar (z. B. 500 W).

Ein Verbraucher, im Ausführungsbeispiel exemplarisch dargestellt für den Verbraucher 4 in Form eines Heizbandes einer Zone der Heizung des Plastifizierzylinders, kann mittels eines Halbleiterschaltelements 17', 17" an den Gleichstromzwischenkreis 7 geschaltet werden. Das Halbleiterschaltelement 17' kann innerhalb der Maschinensteuerung angeordnet sein. Bei dem Halbleiterschaltelement handelt es sich im Ausführungsbeispiel um einen Bipolartransistor mit isolierter Gate-Elektrode (insulated-gate bipolar transistor, kurz IGBT). Dies ist ein Halbleiterbauelement, das in der Leistungselektronik verwendet wird, da es Vorteile des Bipolartransistors (gutes Durchlassverhalten, hohe Sperrspannung, Robustheit) und Vorteile eines Feldeffekttransistors (nahezu leistungslose Ansteuerung) vereinigt. Vorteilhaft ist auch eine gewisse Robustheit gegenüber Kurzschlüssen, da der IGBT den Laststrom begrenzt.

Der Verbraucher 4 ist dabei so beschaffen, dass er für die hohe bzw. höchst zulässige Spannung des Gleichstromzwischenkreises (z. B. 900 VDC) geeignet ist, kurzzeitig (z. B. für 250 ms) hohe Leistungsspitzen (z. B. 30 kW) aufnehmen kann und dabei seinen eigentlichen Zweck (vorliegend: das Heizen einer Zone des Plastifizierzylinders) hinsichtlich der Nennleistung erfüllen kann.

Damit hat der Verbraucher 4 zwei Aufgaben: Zum einen steht er für den Energieabbau im Gleichstromzwischenkreis zur Verfügung, wenn in Bremsphasen alle anderen Elemente (Antriebe 1, 2, 3, Energiespeicher 8, Steuerstromkreis 9) dem Gleichstromzwischenkreis 7 nicht genügend Energie entnehmen, um die Zwischenkreisspannung nicht über den maximal zulässigen Wert ansteigen zu lassen. Zum anderen hat der Verbraucher dann natürlich seine ursprüngliche Aufgabe, vorliegend also das Heizen einer Zone der Plastifiziereinheit.

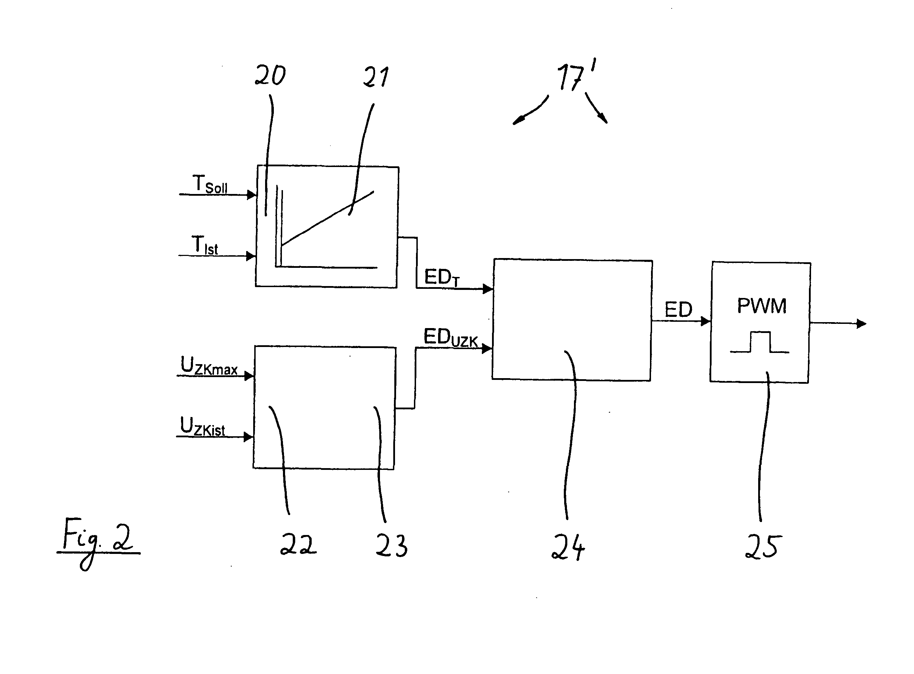

Das Halbleiterschaltelement 17', 17" besteht im Ausführungsbeispiel aus zwei Teilen (17' und 17"). Das eine Teil 17' ist in Fig. 2 mit den wesentlichen Elementen im Einzelnen dargestellt. Dieser Teil des Halbleiterschaltelements erfasst mittels eines Sensors 18 vorliegend die Temperatur T des Heizelements 4, d. h. die Ist-Temperatur Tᵢₛₜ. Außerdem wird mittels eines Spannungsmessers 19 die Ist-Zwischenkreisspannung U_{ZKist} gemessen und dem Halbleiterschaltelement 17' zugeleitet. Aus nicht weiter dargestellten Speichermitteln werden dem Halbleiterschaltelement 17' dann die Soll-Temperatur T_{Soll} des Heizelements 4 und die maximal zulässige Zwischenkreisspannung U_{ZKmax} zugeleitet (s. Fig. 2).

In einem ersten Vergleicher 20 wird die Temperaturdifferenz zwischen Soll- und Ist-Temperatur ermittelt und in einer sich anschließenden ersten Recheneinheit 21 wird errechnet, wie lange eine Einschaltdauer ED_{T} des Heizelements 4 sein muss, um die Soll-Temperatur zu erreichen.

Ferner wird in einem zweiten Vergleicher 22 die Differenz zwischen der gemessenen Zwischenkreisspannung U_{ZKist} und der maximal zulässigen Zwischenkreisspannung U_{ZKmax} ermittelt und in einer sich anschließenden zweiten Recheneinheit 23 berechnet, wie lange eine Einschaltdauer ED_{UZK} für den Verbraucher 4 sein müsste, um den maximal zulässigen Spannungswert nicht zu überschreiten.

Beide Werte der Einschaltdauer ED_{T} (für die Zylindertemperaturregelzone) und ED_{UZK} (für die Zwischenkreisspannungsbegrenzung) werden nunmehr einem Maximalwertbildner 24 zugeleitet. In dieser Funktionseinheit wird die jeweils größere Einschaltdauer ED ermittelt und an einen Funktionsblock 25 weitergegeben.

Die Einschaltdauer ED_{UZK} wird somit also von ED_{T} mit einbezogen bzw. berücksichtigt. Die resultierende Einschaltdauer ED wird im Funktionsblock in ein Steuersignal (Pulsweitenmodulation PWM) umgesetzt und zum zweiten Teil 17" des Halbleiterschaltelements weitergeleitet, wo die Leistungsentnahme aus dem Gleichstromzwischenkreis 7 durch den Verbraucher 4 entsprechend gesteuert wird, d. h. unter Berücksichtigung der entsprechenden Parameter des Verbrauchers 4 werden die Einschaltimpulse an das Halbleiterbauelement 17" ausgegeben und damit der Verbraucher 4 betrieben.

Das Halbleiterschaltelement 17', 17" dient also einerseits zur Begrenzung der Gleichstromzwischenkreisspannung bzw. zum Energieabbau im Gleichstromzwischenkreis und andererseits gleichzeitig zur Regelung eines Betriebsparameters, z. B. zur Temperaturregelung einer Heizung im Plastifizierzylinder.

Eine Möglichkeit, zusätzlich Kosten zu reduzieren, bietet sich an, wenn man den bei vielen Servoumrichtern serienmäßig vorhandenen Bremstransistor (Halbleiterbauelement bzw. IGBT) zur Ansteuerung eines Verbrauchers (z. B. einer Zone der Plastifizierzylinderheizung) verwendet. Dadurch entfällt das üblicherweise hierfür verbaute Solid State Relais.

In Fig. 1 geben die Pfeile die Richtung an, in denen Energie fließt. Das Wechselstromnetz 5 hat typischer Weise eine Spannung von 400 VAC. Im Gleichstromzwischenkreis 7 werden beispielsweise Spannungen von ca. 560 VDC angestrebt. Der Steuerstromkreis 9 wird zumeist mit 24 VDC betrieben.

### Bezugszeichenliste:

- 1: elektrischer Verbraucher (Motor)
- 2: elektrischer Verbraucher (Motor)
- 3: elektrischer Verbraucher (Motor)
- 4: elektrischer Verbraucher (Heizelement)
- 5: Wechselstromnetz
- 6: Gleichrichter
- 7: Gleichstromzwischenkreis
- 8: Speicherelement (Kondensator)
- 9: Steuerstromkreis
- 10: Schaltnetzteil
- 11: elektrischer Verbraucher (CPU)
- 12: elektrischer Verbraucher (CPU)
- 13: elektrischer Verbraucher (CPU)
- 14: elektrischer Verbraucher (Bedieneinheit MMI)
- 15: elektrischer Verbraucher
- 16: elektrischer Verbraucher
- 17', 17": Halbleiterschaltelement (IGBT)
- 18: Sensor
- 19: Spannungsmesser
- 20: erster Vergleicher
- 21: erste Recheneinheit
- 22: zweiter Vergleicher
- 23: zweite Recheneinheit
- 24: Maximalwertbildner
- 25: Funktionsblock (zur Pulsweitenmodulation PWM)

## Patentansprüche

1. Kunststoffverarbeitungsmaschine, insbesondere Spritzgießmaschine, die mindestens zwei elektrische Verbraucher (1, 2, 3, 4) aufweist, wobei mindestens einer der elektrischen Verbraucher (1, 2, 3) auch für einen Generatorbetrieb zur Umwandlung kinetischer Energie in elektrische Energie ausgebildet ist, wobei die Maschine zur Versorgung mit elektrischer Energie mit einem elektrischen Wechselstromnetz (5) in Verbindung steht, wobei das elektrische Netz (5) über einen Gleichrichter (6) mit einem Gleichstromzwischenkreis (7) verbunden ist, wobei zumindest ein Teil der elektrischen Verbraucher (1, 2, 3, 4) mit dem Gleichstromzwischenkreis (7) elektrisch verbunden ist und aus diesem mit elektrischer Energie versorgbar ist und wobei zumindest ein Teil der für einen Generatorbetrieb ausgebildeten elektrischen Verbraucher (1, 2, 3) zur Einspeisung generatorisch erzeugter elektrischer Energie mit dem Gleichstromzwischenkreis (7) in elektrischer Verbindung stehen,
**dadurch gekennzeichnet,**
**dass** mindestens ein elektrischer Verbraucher (4) in Form eines Heizelements an den Gleichstromzwischenkreis (7) elektrisch gekoppelt ist,
wobei die Energieentnahme des elektrischen Verbrauchers (4) aus dem Gleichstromzwischenkreis (7) mittels eines Halbleiterschaltelements (17', 17") gesteuert ist,
wobei das Halbleiterschaltelement (17', 17") mit mindestens einem Temperatursensor (18) zur Erfassung eines Betriebsparameters des elektrischen Verbrauchers (4) in Verbindung steht,
wobei das Halbleiterschaltelement (17', 17") mit mindestens einem Spannungsmesser (19) zur Erfassung der Gleichstromzwischenkreisspannung (U_{ZK}) in Verbindung steht,
wobei das Halbleiterschaltelement (17', 17") zur Steuerung des Verbrauchers (4) in der Weise ausgebildet ist, dass einerseits dem Verbraucher aus dem Gleichstromzwischenkreis (7) die für seine Aufgabe nötige Energie zugeführt wird und andererseits die Zwischenkreisspannung (U_{ZK}) im Gleichstromzwischenkreis (7) unterhalb eines maximal zulässigen Wertes (U_{ZKmax}) gehalten wird,
indem das Halbleiterschaltelement (17', 17") einen ersten Vergleicher (20) zum Vergleichen des vom Temperatursensor (18) gemessenen Werts des Betriebsparameters mit einem vorgegebenen Wert für den Betriebsparameter umfasst,
wobei das Halbleiterschaltelement (17', 17") eine erste Recheneinheit (21) zur Ermittlung einer benötigten Einschaltdauer (ED_{T}) für den elektrischen Verbraucher (4) zum Einhalten des vorgegebenen Werts für den Betriebsparameter umfasst,
wobei das Halbleiterschaltelement (17', 17") einen zweiten Vergleicher (22) zum Vergleichen des vom Spannungsmesser (19) gemessenen Werts der Zwischenkreisspannung (U_{ZK}) mit einem vorgegebenen maximalen Wert für die Zwischenkreisspannung (U_{ZKmax}) umfasst,
wobei das Halbleiterschaltelement (17', 17")eine zweite Recheneinheit (23) zur Ermittlung einer benötigten Einschaltdauer (ED_{UZK}) für den elektrischen Verbraucher (4) zum Einhalten des maximalen Werts für die Zwischenkreisspannung (U_{ZK}) umfasst,
und wobei ein Steuersignal für das Halbleiterschaltelement (17', 17") aus den beiden Einschaltdauern gebildet wird.

2. Kunststoffverarbeitungsmaschine nach Anspruch 1, **dadurch gekennzeichnet, dass** mindestens ein Speicherelement (8) für elektrische Energie mit dem Gleichstromzwischenkreis (7) elektrisch verbunden ist, wobei das Speicherelement (8) für elektrische Energie vorzugsweise ein Kondensator ist.

3. Kunststoffverarbeitungsmaschine nach Anspruch 1 oder 2, **dadurch gekennzeichnet, dass** ein Steuerstromkreis (9) elektrisch über ein Schaltnetzteil (10) mit dem Gleichstromzwischenkreis (7) in Verbindung steht, wobei vorzugsweise mindestens ein elektrischer Verbraucher (11, 12, 13, 14, 15, 16) mit dem Steuerstromkreis (9) elektrisch in Verbindung steht.

4. Kunststoffverarbeitungsmaschine nach Anspruch 3, **dadurch gekennzeichnet, dass** der elektrische Verbraucher (11, 12, 13, 14, 15, 16) eine Maschinensteuerung (CPU), eine Bedieneinheit (MMI), ein Steuerteil eines Servoumrichters, ein Sensor, eine Meldelampe, ein Schütz, ein Schalter, ein Ventil, ein Magnet und/oder ein Lüfter ist.

5. Kunststoffverarbeitungsmaschine nach einem der Ansprüche 1 bis 4, **dadurch gekennzeichnet, dass** das Halbleiterschaltelement (17', 17") ein Bipolartransistor mit isolierter Gate-Elektrode (Insulated Gate Bipolar Transistor, IGBT) ist.

6. Kunststoffverarbeitungsmaschine nach Anspruch 5, **dadurch gekennzeichnet, dass** die erste und die zweite Recheneinheit (21, 23) mit einem Maximalwertbildner (24) verbunden sind, der den größeren der beiden Werte für die Einschaltdauer (ED_{T}, ED_{UZK}) ermittelt, wobei der Maximalwertbildner (24) vorzugsweise mit dem Halbleiterschaltelement (17") in Verbindung steht, um eine vorgegebene Einschaltdauer (ED) für den elektrischen Verbraucher (4) vorzugeben und wobei zwischen dem Maximalwertbildner (24) und dem Halbleiterschaltelement (17") vorzugsweise ein Funktionsblock (25) zur Definition von Einschaltimpulsen angeordnet ist.

## Claims

1. Polymer processing machine, especially injection moulding machine, which has at least two electrical consumers (1, 2, 3, 4), wherein at least one of the electrical consumers (1, 2, 3) is also designed for generator operation for the conversion of kinetic energy into electrical energy, wherein the machine is connected for its supply with electrical energy with an electrical alternating current network (5), wherein the electrical network (5) is connected with a direct current intermediate circuit (7) via a rectifier (6), wherein at least a part of the electrical consumers (1, 2, 3, 4) are electrically connected with the direct current intermediate circuit (7) and are powered from the direct current intermediate circuit (7) with electrical energy and wherein at least a part of the electrical consumers (1, 2, 3) which are designed for generator operation are electrically connected with the direct current intermediate circuit (7) for supplying it with generated electrical energy,
**characterized in that**
at least one electrical consumer (4) being a heating element is electrically coupled to the direct current intermediate circuit (7),
wherein the abstraction of energy by the electrical consumer (4) from the direct current intermediate circuit (7) is controlled by a semiconductor switch element (17', 17"),
wherein the semiconductor switch element (17', 17") is connected with at least one temperature sensor (18) for the detection of an operation parameter of the electrical consumer (4),
wherein the semiconductor switch element (17', 17") is connected with at least one voltage meter (19) for the detection of the voltage (U_{ZK}) of the direct current intermediate circuit (7),
wherein the semiconductor switch element (17', 17") for controlling of the electrical consumer (4) is designed in such a way that on the one hand the energy necessary for its operation is supplied to the consumer from the direct current intermediate circuit (7) and on the other hand the intermediate circuit voltage (U_{ZK}) in the direct current intermediate circuit (7) is kept below a maximal allowable value (U_{KZmax}),
**in that** the semiconductor switch element (17', 17") comprises a first comparator (20) for the comparison of the value of the operation parameter which is detected by the temperature sensor (18) with a predetermined value of the operation parameter,
wherein the semiconductor switch element (17', 17") comprises a first processing unit (21) for the determination of the necessary on-time (ED_{T}) for the electrical consumer (4) for maintaining of the predetermined value of the operation parameter,
wherein the semiconductor switch element (17', 17") comprises a second comparator (22) for the comparison of the value of the intermediate circuit voltage (U_{ZK}) which is detected by the voltage meter (19) with a predetermined maximal value of the intermediate circuit voltage (U_{ZKmax}),
wherein the semiconductor switch element (17', 17") comprises a second processing unit (23) for the determination of the necessary on-time (ED_{UZK}) for the electrical consumer (4) for maintaining of the maximal value of the intermediate circuit voltage (U_{ZK}), and
wherein a control signal for the semiconductor switch element (17', 17") is determined from the two on-times.

2. Polymer processing machine according claim 1, **characterized in that** at least one storage element (8) for electrical energy is electrically connected with the direct current intermediate circuit (7), wherein the storage element (8) for electrical energy is preferably a capacitor.

3. Polymer processing machine according to claim 1 or 2, **characterized in that** a control circuit (9) is electrically connected with the direct current intermediate circuit (7) via a switching power supply (10), wherein preferably at least one electrical consumer (11, 12, 13, 14, 15, 16) is electrically connected with the control circuit (9).

4. Polymer processing machine according to claim 3, **characterized in that** the electrical consumer (11, 12, 13, 14, 15, 16) is a machine control (CPU), a control unit (MMI), a control unit of a servo converter, a sensor, an alarm lamp, a contactor, a switch, a valve, a magnet and/or a fan.

5. Polymer processing machine according to one of claims 1 to 4, **characterized in that** the semiconductor switch element (17', 17") is an Insulated Gate Bipolar Transistor (IGBT).

6. Polymer processing machine according to claim 5, **characterized in that** the first and second processing unit (21, 23) are connected with a generator of maximum value (24) which determines the bigger one of the two values for the on-time (ED_{T}, ED_{UZK}), wherein the generator of maximum value (24) is preferably connected with the semiconductor switch element (17', 17") for pretending of a predetermined on-time (ED) for the electrical consumer (4) and wherein preferably a functional block (25) is arranged between the generator of maximum value (24) and the semiconductor switch element (17', 17") for the definition of switching-on pulses.

## Revendications

1. Machine de mise en oeuvre des matières plastiques, notamment machine de moulage par injection, qui présente au moins deux charges électriques (1, 2, 3, 4), au moins l'une des charges électriques (1, 2, 3) étant également configurée pour fonctionner en mode générateur pour convertir l'énergie cinétique en énergie électrique, la machine étant en liaison avec un réseau électrique de courant alternatif (5) pour son alimentation en énergie électrique, le réseau électrique (5) étant relié avec un circuit intermédiaire à courant continu (7) par le biais d'un redresseur (6), au moins une partie des charges électriques (1, 2, 3, 4) étant reliée électriquement avec le circuit intermédiaire à courant continu (7) et pouvant être alimentée en énergie électrique à partir de celui-ci et au moins une partie des charges électriques (1, 2, 3) qui sont configurées pour fonctionner en mode générateur étant en liaison électrique avec le circuit intermédiaire à courant continu (7) pour injecter l'énergie électrique générée en mode générateur,
**caractérisée en ce**
**qu'**au moins une charge électrique (4) est connectée électriquement au circuit intermédiaire à courant continu (7) sous la forme d'un élément chauffant,
le prélèvement d'énergie par la charge électrique (4) du circuit intermédiaire à courant continu (7) étant commandé au moyen d'un élément de commutation à semiconducteur (17', 17"),
l'élément de commutation à semiconducteur (17', 17") étant relié avec au moins une sonde de température (18) pour détecter un paramètre de fonctionnement de la charge électrique (4),
l'élément de commutation à semiconducteur (17', 17") étant relié avec au moins un mesureur de tension (19) pour détecter la tension de circuit intermédiaire à courant continu (U_{ZK}),
l'élément de commutation à semiconducteur (17', 17") étant configuré pour commander la charge (4) de telle sorte que d'une part l'énergie nécessaire à l'accomplissement de la tâche de la charge lui est acheminée depuis le circuit intermédiaire à courant continu (7) et d'autre part la tension de circuit intermédiaire (U_{ZK}) est maintenue dans le circuit intermédiaire à courant continu (7) au-dessous d'une valeur maximale admissible (U_{ZKmax}),
par le fait que l'élément de commutation à semiconducteur (17', 17") comprend un premier comparateur (20) pour comparer la valeur du paramètre de fonctionnement mesurée par la sonde de température (18) avec une valeur prédéfinie pour le paramètre de fonctionnement,
l'élément de commutation à semiconducteur (17', 17") comprenant une première unité de calcul (21) pour déterminer une durée de mise en circuit nécessaire (ED_{T}) pour la charge électrique (4) pour maintenir la valeur prédéfinie pour le paramètre de fonctionnement, l'élément de commutation à semiconducteur (17', 17") comprenant un deuxième comparateur (22) pour comparer la valeur de la tension de circuit intermédiaire (U_{ZK}) mesurée par le mesureur de tension (19) avec une valeur maximale prédéfinie pour la tension de circuit intermédiaire (U_{ZKmax}),
l'élément de commutation à semiconducteur (17', 17") comprenant une deuxième unité de calcul (23) pour déterminer une durée de mise en circuit nécessaire (ED_{UZK}) pour la charge électrique (4) pour maintenir la valeur maximale pour la tension de circuit intermédiaire (U_{ZKmax}),
et un signal de commande pour l'élément de commutation à semiconducteur (17', 17") étant généré à partir des deux durées de mise en circuit.

2. Machine de mise en oeuvre des matières plastiques selon la revendication 1, **caractérisée en ce qu'**au moins un élément d'accumulation (8) pour de l'énergie électrique est relié électriquement avec le circuit intermédiaire à courant continu (7), l'élément d'accumulation (8) pour de l'énergie électrique étant de préférence un condensateur.

3. Machine de mise en oeuvre des matières plastiques selon la revendication 1 ou 2, **caractérisée en ce qu'**un circuit de courant de commande (9) est en liaison électrique avec le circuit intermédiaire à courant continu (7) par le biais d'une alimentation à découpage (10), de préférence au moins une charge électrique (11, 12, 13, 14, 15, 16) étant en liaison électrique avec le circuit de courant de commande (9).

4. Machine de mise en oeuvre des matières plastiques selon la revendication 3, **caractérisée en ce que** la charge électrique (11, 12, 13, 14, 15, 16) est une commande de machine (CPU), une unité de commande (MMI), un bloc de commande d'un convertisseur d'asservissement, un capteur, un témoin lumineux de signalisation, un contacteur, un commutateur, une vanne, un aimant et/ou un ventilateur.

5. Machine de mise en oeuvre des matières plastiques selon l'une des revendications 1 à 4, **caractérisée en ce que** l'élément de commutation à semiconducteur (17', 17") est un transistor bipolaire muni d'une électrode de gâchette isolée (Insulated Gate Bipolar Transistor, IGBT).

6. Machine de mise en oeuvre des matières plastiques selon la revendication 5, **caractérisée en ce que** la première et la deuxième unité de calcul (21, 23) sont reliées avec un calculateur de valeur maximale (24) qui détermine la plus grande des deux valeurs de la durée de mise en circuit (ED_{T}, ED_{JZK}), le calculateur de valeur maximale (24) étant de préférence en liaison avec l'élément de commutation à semiconducteur (17") pour prescrire une durée de mise en circuit prédéfinie (ED) pour la charge électrique (4) et un bloc fonctionnel (25) destiné à définir des impulsions de mise en circuit étant de préférence disposé entre le calculateur de valeur maximale (24) et l'élément de commutation à semiconducteur (17").
